# EUROPEAN PATENT APPLICATION

(11) **EP 3 130 834 A1**
(43) Date of publication of application: **15.02.2017**
(21) Application number: 15180943.1
(22) Date of filing: 13.08.2015
(51) Int. Cl.: F17C 11/00

(54) **A VEHICLE COMPRISING A STORAGE SYSTEM AND A COMBUSTION ENGINE, THE STORAGE SYSTEM COMPRISING A CONTAINER AND AT LEAST TWO STORAGE VESSELS**

(71) Applicant: BASF SE, 67056 Ludwigshafen am Rhein (DE)
(72) Inventor: The designation of the inventor has not yet been filed
(74) Representative: Büchel, Edwin

(57) **Abstract**

The invention is related to a vehicle (2) comprising a storage system (1) and a combustion engine (4), the storage system (1) comprising a container (3) with a first interior (5) and at least two storage vessels (7), each with a second interior (9), wherein the at least two storage vessels (7) are disposed in the container (3), each of the at least two storage vessels (7) comprises a storage vessel wall (15) separating the first interior (5) from the second interior (9) and the container (3) has a central longitudinal axis (51) and comprises a container wall (31) with two end surfaces (33) and a lateral surface (35) enclosing the at least two storage vessels (7),
wherein the first interior (5) comprises a first gas and the second interior (9) comprises a second gas and a sorption medium (17), and the first gas comprises an exhaust gas from the combustion engine (4) and the second gas comprises a fuel for the combustion engine (4),
wherein at least one interspace (49) is provided between the at least two storage vessels (7) and
wherein the container (3) comprises at least one nozzle (53) with a nozzle outlet (56) for the first gas, the at least one nozzle (53) is connected with an exhaust gas outlet of the combustion engine (4) by a connecting pipe (45) and the nozzle outlet (56) of the at least one nozzle (53) is directed towards the at least one interspace (49).

The invention is further related to a process for operation of a vehicle (2).

## Description

The invention relates to a vehicle comprising a storage system and a combustion engine, the storage system comprising a container with a first interior and at least two storage vessels with a second interior, wherein the at least two storage vessels are disposed in the container.

Owing to the increasing scarcity of oil resources, research is increasingly being made to unconventional fuels such as methane, ethanol or hydrogen for operating an internal combustion engine or a fuel cell. For this purpose, vehicles comprise a storage vessel for keeping a stock of the fuel. For the storage of gas in stationary and mobile applications, the gas is stored in pressure vessels, often referred to as compressed natural gas (CNG) technique or in sorption stores, often referred to as adsorbed natural gas (ANG) technique. Sorption stores are also known as ANG tanks. ANG has the potential to replace compressed natural gas CNG in mobile storage applications such as in vehicles. In ANG-applications a porous solid is packed in a storage vessel to increase the storage density, enabling lower pressure operation with the same capacity or higher capacities at the same storage pressure.

Sorption, covering adsorption and absorption, is an exothermic process. Any sorption or desorption is accompanied by a temperature change in an ANG-storage system. The heat of sorption has a detrimental effect on performance during both filling cycles and discharge cycles. A temperature increase as high as 80°C can occur during the filling cycle. A filling cycle normally will be performed at a fuel station, at least for mobile applications, where the released sorption heat can be removed. Contrary to the filling cycle, the rate of discharge is dictated by the energy demand for desorption.

Such storage vessels comprise sorption media, which is also referred to as adsorbent medium, adsorbent, adsorber or absorber. The gas is stored by adsorption on the sorption medium, in the cavities between individual particles of the sorption medium and in parts of the vessel, which are not filled with sorption medium. Alternatively or additionally the gas can be absorbed by the sorption medium. The filled storage vessel can be pressurized or non-pressurized. Selection of a suitable vessel depends on the applied maximum pressure. The higher the storage pressure the more gas can be stored per volume.

The sorption capacity of the solid, defined by the ratio of the mass of the sorbed gas or liquid to the mass of the solid, strongly depends on temperature and is reduced with increasing temperature. In the aim of a maximal exploitation of the storage space, the temperature profile established in the storage vessel during the filling procedure has to be taken into consideration. An efficient sorption allows a reduced filling time as the same amount of gas can be stored in a shorter time period. Hence, the maximum amount of stored gas can be increased when the available filling time is limited. During filling the storage vessel with gas two sources are relevant for a temperature increase in the vessel. These are the heat due to compression of the gas and the heat liberated as a result of the exothermic sorption. The amount of generated heat directly depends on the amount of sorbed gas. The more gas is sorbed on the sorption medium, the more heat is liberated. And with an increasing sorbed amount of gas on the solid, the sorption rate, defined as amount of gas sorbed per unit of time, is reduced.

In turn, desorption is an endothermic process and heat has to be supplied when gas is taken from the storage vessel. Heat management is therefore of great importance when storage vessels with sorption medium are used.

Due to their large surface areas, in particular metal-organic framework materials (MOFs) are of interest for applications in gas storage. Advantageously, pulverulent materials are processed to compact shaped bodies. These can be handled more conveniently and especially in a safer manner. Shaped bodies allow better exploitation of volumes available in apparatuses or vessels and reduce pressure drops. Prerequisite for a successful use for shaped bodies are preliminarily a high sorption capacity, adequate thermal and mechanical stability and high abrasion resistance.

US 2014/0290611 A1 discloses a natural gas storage system including a container, a natural gas adsorbant positioned in the container and a heating mechanism to selectively thermally activate the adsorbant.

According to WO 2013/130401 A1 a natural gas adsorption device includes at least one porous, flexible container that is permeable to natural gas, a natural gas adsorption material having a volume average diameter larger than the average pore diameter of the container and a storage tank enclosing the container and the natural gas adsorption material.

US 2008/0168776 A1 reports on a hydrogen storage tank system based on gas adsorption on high-surface materials comprising an integrated heat exchanger. The gas storage system, storing gas by cryo-adsorption, comprises an insulating container and storage vessels. A cooling fluid is provided to remove heat when the storage vessels are being filled with the gas.

For gas storage systems a complete emptying of the storage vessel is not possible and a residual amount of gas always remains in the storage vessel when a minimum gas pressure level is required for example for the operation of a combustion engine of a vehicle. This residual amount of gas is higher for storage systems comprising sorption media than for storage systems without sorption media. Further, the residual amount of gas strongly depends on temperature.

It is an object of the present invention to provide a vehicle comprising a sorptive storage system and a process for operation of the vehicle, which enables the reduction of the residual amount of gas still present in the storage vessel when a minimum storage pressure is reached. Further, the storage system should have a small internal pressure drop and the homogeneity of the internal temperature profile is to be improved.

This object is achieved by a vehicle comprising a storage system and a combustion engine, the storage system comprising a container with a first interior and at least two storage vessels, each with a second interior, wherein the at least two storage vessels are disposed in the container, each of the at least two storage vessels comprises a storage vessel wall separating the first interior from the second interior and the container has a central longitudinal axis and comprises a container wall with two end surfaces and a lateral surface enclosing the at least two storage vessels, wherein the first interior comprises a first gas and the second interior comprises a second gas and a sorption medium, and the first gas comprises an exhaust gas from the combustion engine and the second gas comprises a fuel for the combustion engine, wherein at least one interspace is provided between the at least two storage vessels and wherein the container comprises at least one nozzle with a nozzle outlet for the first gas, the at least one nozzle is connected with an exhaust gas outlet of the combustion engine by a connecting pipe and the nozzle outlet of the at least one nozzle is directed towards the at least one interspace.

The object is further achieved by a process for operation of a vehicle comprising a storage system and a combustion engine, the storage system comprising a container with a first interior and at least two storage vessels, each with a second interior, wherein the at least two storage vessels are disposed in the container, each of the at least two storage vessels comprise a storage vessel wall separating the first interior from the second interior and the container has a central longitudinal axis and comprises a container wall with two end surfaces and a lateral surface enclosing the at least two storage vessels, wherein at least one interspace is provided between the at least two storage vessels wherein the first interior comprises a first gas and the second interior comprises a second gas, which is contacted with a sorption medium, wherein at least part of the second gas is conducted from the second interior to the combustion engine and the second gas is combusted in the combustion engine to form the first gas, and wherein the first gas is conducted from the combustion engine into the first interior and through at least one nozzle having a nozzle outlet and a stream of the first gas is directed from the nozzle outlet into the at least one interspace, where the stream of the first gas flows along the storage vessel walls having a maximum flow velocity at the nozzle outlet of at least 30 m/s.

By means of the invention, heat of the exhaust gas from the combustion engine is used to increase the temperature of the at least two storage vessels comprising the second gas and the sorption medium. At a higher temperature, a reduced residual amount of the second gas is required to remain in the at least two storage vessels in order to provide a predetermined minimum storage pressure, which is necessary to operate the combustion engine. For a combustion engine in vehicles a minimum storage pressure of typically 4 bar is needed. Thus, by means of the invention, the effective storage capacity of the storage system is enhanced.

By the presence of the at least one nozzle the flow velocity of the first gas entering the container is increased and the stream of the first gas is led between the at least two storage vessels. By applying the at least one nozzle as a means for flow control of the first gas within the first interior, the flow velocity of the stream of the first gas along the storage vessel walls is increased leading to a more effective heat transfer between the storage vessel walls and the first gas.

The at least two storage vessels are preferably arranged without any direct contact between the walls of the respective storage vessels and a resulting distance between the storage vessels leads to the at least one interspace between the at least two storage vessels. The at least two storage vessels are preferably arranged in the container with a shortest distance between the at least two storage vessels in a range from 1.0 mm to 100 mm, more preferably from 1.5 mm to 100 mm, providing the at least one interspace. The stream of the first gas is substantially conducted between the at least two storage vessels from the inlet of the container to the outlet of the container.

The at least one nozzle preferably has a diameter, which is the outlet diameter, in a range from 1 mm to 3 mm. A full cone nozzle is preferred as nozzle in the aim of limiting the resulting pressure drop and producing a directed stream.

Preferably, the shortest distance between the at least two storage vessels is larger than the diameter of the at least one nozzle. Further, the shortest distance between the at least two storage vessels is preferably smaller than one fifth of a longest extension in vertical direction of the container, also referred to as height of the container. For larger distances the flow velocity of the first gas between the at least two storage vessels is not sufficiently high.

Further, it is preferred that the container comprises supports, which are joint, preferably by means of weldings or screws, to the container in order to fix the position of the at least two storage vessels in the container. More preferably, the supports are metal sheets comprising holes, in which the at least two storage vessels are inserted.

The container preferably comprises baffles, more preferably in form of planar metal sheets, along the lateral surface of the container in order to minimize a heat transfer to the surrounding over the container wall and to optimize the flow around the at least two storage vessels.

In a preferred embodiment all nozzles are provided at one of the two end surfaces of the container wall. The nozzles are preferably incorporated in the container wall and no further construction parts are needed.

In an alternative embodiment, an additional plate is provided in the first interior and all nozzles are provided at the plate, the plate being arranged in the first interior between one of the two end surfaces of the container wall and the at least two storage vessels. Preferably, the plate is arranged in parallel to one end surface of the container wall. In this embodiment, the container wall and the container can be produced by a standard production process without any complex modification. The plate comprising the nozzles is positioned in the container providing the opportunity to be exchanged easily.

Preferably, the container comprises more than one nozzle being connected with the exhaust gas outlet of the combustion engine, wherein the nozzle outlet of at least one of the nozzles is directed between one of the at least two storage vessels and the lateral surface of the container wall. An additional nozzle, which is arranged in proximity to the lateral surface enables an improved heat transfer at the storage vessel walls not only between the at least two storage vessels but also on the side of the storage vessel, which faces to the lateral surface of the container wall. Preferably, the diameter of the nozzle outlet, being directed between one of the at least two storage vessels and the lateral surface of the container wall, is preferably smaller, more preferably by a factor of at least 2^0.5 smaller and most preferably by a factor of 2^0.5 smaller, than the outlet diameter of the nozzle being directed towards the interspace between the at least two storage vessels because a smaller heat flow is required on the side of the storage vessel facing to the container wall. It is further preferred that the distance between the storage vessel and the lateral surface of the container is by a factor of at least 2, more preferably by a factor of 2, smaller than the shortest distance between two storage vessels. Thus, a uniform residence time distribution of the first gas in the container is achieved.

At least one nozzle is preferably arranged in a way that a first distance between the at least one nozzle and the central longitudinal axis of the container is smaller than a second distance between the at least one nozzle and the lateral surface of the container wall.

More generally, assuming a fictional horizontal plane, which has an equal distance from an uppermost point of the container and a lowermost point of the container, at least one nozzle and more preferably all nozzles are preferably arranged in a way that a third distance between the at least one nozzle and the fictional horizontal plane is smaller than a fourth distance between the at least one nozzle and the lateral surface of the container wall.

Thus, the flow velocity of the first gas is especially enhanced in central positions in the container, leading to a more uniform temperature distribution and an improved heat transfer of the storage vessel wall.

Depending on the installation space available and the maximum permissible storage pressure in the at least two storage vessels, in general different cross-sectional areas are suitable for the at least two storage vessels, for example circular, elliptical or rectangular cross-sectional areas.

Typically, the container wall has two end surfaces and a lateral surface enclosing the at least two storage vessels. Preferably, the at least two storage vessels have a cylindrical form, more preferably with a longitudinal extension being longer than a radial extension, and the at least two storage vessels are mounted in a horizontal position.

Diameters of each of the at least two storage vessels of approximately 50 cm are typical for tanks in trucks and approximately 20 cm for tanks in cars, respectively. In cars, typically, total inner volumes of each storage vessel between 20 liters and 40 liters are provided, whereas storage vessels of a volume between 500 liters and 3000 liters can be found in trucks. The length in longitudinal direction of each of the at least two storage vessels preferably corresponds to the length in longitudinal direction of the container and is preferably between 50 cm and 150 cm, more preferably between 80 cm and 120 cm, for example 100 cm.

The storage system can comprise more than two storage vessel. The storage system comprises preferably at least three storage vessels and more preferably at least four storage vessels, for example four storage vessels. The at least two storage vessels are preferably arranged in parallel to each other in the container and in parallel to a central longitudinal axis of the container. More preferably, the storage vessels are arranged in one plane next to each other.

In the case, where more than two storage vessels are present in the storage system, preferably at least two nozzles are provided in the container, each nozzle outlet being directed towards one of at least two interspaces being formed between the at least three storage vessels.

Even though several forms of the container are applicable, the container preferably has a cuboid form. Referring to a cuboid container comprising for example two storage vessels, the end surfaces are the surfaces with the smallest area referring to all surfaces of the cuboid. Preferably, the container is mounted in a horizontal position, the end surfaces showing in horizontal direction.

Typically, the container has a length in longitudinal direction from 80 to 120 cm, for example 1 m, a height in a range from 20 to 40 cm, preferably from 25 to 35 cm, for example 30 cm and a width in a range from 20 to 200 cm, preferably from 50 to 150 cm, for example 120 cm.

The first interior is a space which is limited by the container wall and the storage vessel walls. The second interior is enclosed by a storage vessel wall.

The inlet and the outlet are preferably arranged on opposing sides of the container. Typically, the inlet and the outlet are provided at the container wall, each arranged at one of the two end surfaces of the container wall, respectively. The inlet is preferably connected to an exhaust gas outlet of the combustion engine by a connecting pipe.

Instead of leading the exhaust gas completely from the combustion engine into the container, it is also possible to use a bypass for leading exhaust gas from the combustion engine into the container, wherein the bypass comprises at least 50 % by volume, referring to the total amount of exhaust gas produced by the combustion engine.

The temperature of the first gas entering the container at the inlet is typically lower than the temperature of the first gas at the outlet. The temperature difference of the first gas between the inlet and the outlet is usually more than 100°C. The first gas has a temperature of preferably at least 300°C when entering the first interior, more preferably at least 400°C and most preferably between 430°C and 470°C.

The first gas is led through the container comprising the at least two storage vessels and a heat transfer from the first gas to the second gas occurs substantially at the storage vessel walls. The area of the storage vessel walls is preferably completely available as heat transfer area. For an improved heat transfer, the storage vessel walls are brought into direct contact with the stream of the first gas coming from the combustion engine.

Due to the at least one nozzle, the heat transfer from the first gas to the at least two storage vessels predominantly occurs on the side of one storage vessel facing the other storage vessel.

With the increased flow velocity of the stream of the first gas due to the at least nozzle, a higher amount of heat reaches the parts of the at least two storage vessels which are closer to the outlet of the container than to its inlet. The temperature profile of the container and in the at least two storage vessels is rendered more homogeneous in vertical and also in horizontal direction.

In order to achieve a more homogeneous temperature profile in longitudinal direction of the at least two storage vessels, which is preferably the horizontal direction, the flow velocity of the first gas is enhanced along the storage vessel walls compared to a storage system without the at least one nozzle. Due to the increased flow velocity the convective heat transfer along the storage vessel walls becomes more dominant in relation to the heat conduction towards the interior of the at least two storage vessels, labeled as second interiors of the storage system; this heat conduction is driven by the temperature difference between the first gas and the second gas.

It is important to transfer the heat along the length in longitudinal direction of the at least two storage vessels outside of the at least two storage vessels as heat conductivity inside the at least two storage vessels is quite limited due to the sorption medium.

As the dependency of the sorption capacity on temperature is not linear, the specific temperature profile in the container has a pronounced effect on desorption and thus on the residual amount of gas remaining in the at least two storage vessels. Especially for temperatures of more than 80°C, a further increase in temperature only leads to further limited desorption as the sorption capacity is already significantly reduced at these high temperatures. The temperature profile in the container is also crucial for the amount of heat that is transferred via the container wall to the environment and which is therefore lost for the intended heat transfer to the at least two storage vessels.

The invention also reduces safety risks as due to a more homogeneous temperature distribution a local overheating of parts of the storage vessel walls is avoided.

The overall pressure drop in the first interior, referring to the first gas, substantially resulting from the presence of the at least one nozzle in the container, is preferably less than 50 mbar, more preferably less than 20 mbar and most preferably less than 10 mbar. Higher pressure drops within the container would interfere with the operation of the combustion engine, as the exhaust gas is preferably directly led into the container.

Size, position and type of the at least one nozzle as well as its direction or orientation predominantly determine the internal pressure drop of the container, referring to the stream of the first gas.

The storage vessel is preferably a pressure vessel and the storage vessel walls are preferably not permeable for gas; otherwise no pressure within the storage vessel could be established. A maximum storage pressure in the at least two storage vessels depends on the application and type of the vehicle as well as on the embodiment of the at least two storage vessels. Even though applications with storage pressure of up to 260 bar exists, preferably, the second gas is stored in the at least two storage vessels at a pressure of up to 100 bar, preferably the maximum storage pressure is from 30 to 90 bar, most preferably from 60 to 80 bar. In an alternative embodiment, the maximum storage pressure is preferably from 200 to 250 bar.

The walls of the at least two storage vessels can be made from any material as for example metal such as aluminum, steel, fabric, fiber, plastic or composite material. Fiber composite material, aluminum and steel are preferred.

Generally, at least one opening is provided in the storage vessel wall for each storage vessel in order to provide an inlet and/or an outlet for filling the second gas into the at least two storage vessels. Preferably the inlet and the outlet at the storage vessel wall are provided at the same half of one storage vessel. The half can also be named as side or end. The inlet and the outlet can be located in the same position in the storage vessel wall and combined in one construction part or adapter.

Generally, processes for gas storage by means of porous solids are described in more detail for example in WO-A 2005/003622, WO-A 2003/064030, WO-A 2005/049484, WO-A 2006/089908 and DE-A 10 2005 012 087.

The close arrangement of the inlet and the outlet at the storage vessel is especially advantageous on order to establish a flow-through in the storage vessel, for example during filling of the storage vessel with the second gas, which is further described in WO 2014/057416. For a flow-through regime in the storage vessel a flow-through is established in the second interior during filling and a gas flow of the second gas through the outlet at the storage vessel wall exceeds 0 kg/h, preferably 50 kg/h and more preferably 100 kg/h during filling.

It is also preferred that the container wall is not permeable for gas. Nonetheless, small amounts of the first gas might escape from the container through the container wall in other locations than the points where the first gas is intended to be led into and out of the container. It is further preferred that the container wall has a heat transfer coefficient α of at least 10 W/(m²·K) in order to minimize heat losses towards the surroundings of the container.

In order to minimize the heat loss towards the surroundings of a container, the container wall preferably comprises a double wall. The slot between two walls of the double wall is preferably filled with a gas, for example air.

The container wall can be equipped with high temperature insulation material such as graphite, ceramics or microporous thermal insulation material.

The container can also be configured as a drawer, wherein a compartment, which comprises the at least two storage vessels and which is open towards one direction, preferably not having a top cover, is arranged in a movable manner in a shell enclosing the compartment. In a closed position, the shell covers the open side of the compartment.

Preferably the fuel is selected from the group consisting of natural gas, shale gas, town gas, methane, ethane, hydrogen, propane, propene, ethylene, carbon dioxide and combinations thereof. In a particularly preferred embodiment, the second gas comprises methane and/or hydrogen to an extent of more than 70 % by volume.

For the purpose of the present invention, the term "gas" is used in the interest of simplicity, but gas mixtures are likewise encompassed. The gas can also comprise small amounts of the liquid.

The sorption medium can generally be disposed in the at least two storage vessels in form of powder, pellets, shaped bodies or monoliths or combinations thereof. As pellets extrudates are preferred. When the sorption medium is present as a bed of pellets, the ratio of the permeability of the pellets to the smallest pellet diameter is at least between 1·10⁻¹¹ m²/m and 1·10⁻¹⁶ m²/m, preferably between 1·10⁻¹² m²/m and 1·10¹⁴ m²/m, and most preferably 1·10⁻¹³ m²/m.

In an alternative embodiment, it is further preferred that the sorption medium is present in form of at least one monolith and the at least one monolith has an extension in one direction in space in the range from 10 cm to 100 cm, preferably 5 cm to 50 cm. A monolith is understood to be a shaped body with a greater size compared to known sizes of for example pellets.

In case where each of the at least two storage vessels comprises only one monolith, the monolith has a longest first extension in radial direction, and a longest second extension in longitudinal axial direction, wherein the longest first extension is smaller than the longest second extension, axial and radial referring to the storage vessel. In a preferred embodiment, the longest first extension of the monolith is in a range from 10 cm to 100 cm and the longest second extension of the monolith is in a range from 20 cm to 300 cm. In a further preferred embodiment, applicable for example for cars, the longest second extension of the monolith is in the range from 20 cm to 120 cm, more preferably from 90 cm to 110 cm, and the longest first extension of the monolith is in a range from 10 cm to 60 cm, more preferably from 20 cm to 40 cm. In another further preferred embodiment, applicable for example for trucks, the longest second extension of the monolith is in the range from 100 cm to 300 cm, more preferably from 150 cm to 200 cm and the longest first extension of the monolith is in a range from 30 cm to 100 cm, more preferably from 40 cm to 60 cm.

In an alternative embodiment, more than one monolith made of the sorption medium are provided in each of the at least two storage vessels. Preferably, three to ten monoliths are provided in each of the at least two storage vessels, most preferably five to six. For this embodiment, a ratio between a longest first extension of each of the at least two monoliths in a radial direction and a longest second extension of each of the at least two monoliths in the axial directions is equal to or greater than 5, axial and radial referring to the storage vessel. Preferably, each of the at least two monoliths has a disk-like shape and the at least two monoliths are arranged one next to the other in longitudinal direction of the storage vessel. Preferably, in a cross-sectional view, the form of the circumference of the storage vessel corresponds to the form of the circumference of each of the at least two monoliths.

Assuming a longitudinal central axis of the storage vessel, the at least one monolith comprises an opening in axial direction, axial referring to the central axis of the storage vessel. Preferably, the at least one monolith is completely traversed by the opening. Further, the at least one monolith comprises preferably in addition to the opening hollow channels in the axial direction and a cross-sectional area of each hollow channel is smaller than a cross-sectional area of the opening.

Preferably, the longest diameter of the opening is in the range from 0.3 % to 20 % of the longest diameter of the radial cross-sectional area of the storage vessel. It is further preferred when the opening in the at least one or the at least two monoliths is arranged centrally with respect to the storage vessel.

The at least one monolith can comprise at least one spacer providing an open space, which is free of the sorption medium, between the monolith and the storage vessel wall or between two of the monoliths.

Preferably, the sorption medium is selected from the group consisting of activated charcoals, zeolites, activated alumina, silica gels, open pore polymer foams, metal hydrides, metal organic frameworks and combinations thereof.

Zeolites are crystalline aluminosilicates having a microporous framework structure made up of AlO₄ and SiO₄ tetrahedra. Here, the aluminum and silicon atoms are joined to one another via oxygen atoms. Possible zeolites are zeolite A, zeolite Y, zeolite L, zeolite X, mordenite, ZSM (Zeolites Socony Mobil) 5 or ZSM 11. Suitable activated carbons are in, particular, those having a specific surface area above 500 m² g⁻¹, preferably about 1500 m² g⁻¹, very particularly preferably above 3000 m² g⁻¹. Such an activated carbon can be obtained, for example under the name Energy to Carbon or MaxSorb.

Metal-organic frameworks (MOF) are known in the prior art and are described for example in US 5,648,508, EP-A 0 700 253, M. O'Keeffe et al., J. Sol. State Chem., 152 (2000), pages 3 to 20, H. Li et al., Nature 402, 1 (1999), page 276, M. Eddaoudi et al., Topics in Catalysis 9, (1999), pages 105 to 111, B. Chen et al., Science 291, (2001), pages 1021 to 1023, DE-A 101 11 230, DE-A 10 2005 053430, WO-A 2007/054581, WO-A 2005/049892 and WO-A 2007/023134. The metal-organic frameworks (MOF) mentioned in EP-A 2 230 288 A2 are particularly suitable for storage vessels. Preferred metal-organic frameworks (MOF) are MIL-53, Zn-tBu-isophthalic acid, Al-BDC, MOF 5, MOF-177, MOF-505, MOF-A520, HKSUST-1, IRMOF-8, IRMOF-11, Cu-BTC, Al-NDC, Al-AminoBDC, Cu-BDC-TEDA, Zn-BDC-TEDA, Al-BTC, Cu-BTC, Al-NDC, Mg-NDC, Al-fumarate, Zn-2-methylimidazolate, Zn-2-aminoimidazolate, Cu-biphenyldicarboxylate-TEDA, MOF-74, Cu-BPP, Sc-terephthalate. Greater preference is given to MOF-177, MOF-A520, KHUST-1, Sc-terephthalate, Al-BDC and Al-BTC.

Apart from the conventional method of preparing the MOFs, as described, for example, in US 5,648,508, these can also be prepared by an electrochemical route. In this regard, reference may be made to DE-A 103 55 087 and WO-A 2005/049892. The metal organic frameworks prepared in this way have particularly good properties in respect of the sorption and desorption of chemical substances, in particular gases.

Particularly suitable materials for the adsorption in storage vessels are the metal-organic framework materials MOF A520, MOF Z377 and MOF C300.

MOF A 520 is based on aluminum fumarate. The specific surface area of a MOF A520, measured by porosimetry or nitrogen adsorption, is typically in the range of from 800 m²/g to 2000 m²/g. The adsorption enthalpy of MOF A520 with regard to natural gas amounts to 17 kJ/mol. Further information on this type of MOF may be found in "Metal-Organic Frameworks, Wiley-VCH Verlag, David Farrusseng, 2011 ". MOF Z377, in literature also referred to as MOF 177, is based on zinc-benzene-tribenzoate. The specific surface area of a MOF Z377, measured by porosimetry or nitrogen adsorption, is typically in the range from 2000 m²/g to 5000 m²/g. The MOF Z377 typically possesses an adsorption enthalpy between 12 kJ/mol and 17 kJ/mol with respect to natural gas. MOF C300 is based on copper benzene-1,3,5-tricarboxy-late and for example commercially available from Sigma Aldrich under the trade name Baso-lite® C300.

WO-A-03/102000 describes in general terms the conversion of metal-organic framework powder into shaped bodies like pellets with a resistance to pressure in the range from 2 to 100 N. In an example pellets which have a resistance to pressure of 10 N are made by means of eccentric press.

To form shaped bodies several routes exist, among them molding the pulverulent material alone or in combination with a binder and/or other components into a shaped body, for example by pelletizing. In the context of the present invention, the term "molding" refers to any process known to the expert in the field by which a porous material, i.e. any powder, powdery substance, array of crystallites etc., can be formed into a shaped body that is stable under the conditions of its intended use.

While the step of molding into a shaped body is mandatory, the following steps are optional. The molding may be preceded by a step of mixing. The molding may be preceded by a step of preparing a paste-like mass or a fluid containing the porous material, for example by adding solvents, binders or other additional substances. The molding may be followed by a step of finishing, in particular a step of drying.

The step of molding, shaping or forming may be achieved by any method known to a person skilled in the art to achieve agglomeration of a powder, a suspension or a paste-like mass. Such methods are described, for example, in Ullmann's Enzyklopädie der Technischen Chemie, 4th Edition, Vol. 2, p. 313 et seq., 1972, whose respective content is incorporated into the present application by reference.

In general, the following main pathways can be discerned: briquetting or tableting, i.e. mechanical pressing of the powdery material, with or without binders and/or other additives, granulating (pelletizing), i.e. compacting of moistened powdery materials by subjecting it to rotating movements, and sintering, i.e. subjecting the material to be compacted to a thermal treatment. The latter is limited for the material according to the invention due to the limited temperature stability of the organic materials.

Specifically, the molding step according to the invention is preferably performed by using at least one method selected from the following group: briquetting by piston presses, briquetting by roller pressing, binderless briquetting, briquetting with binders, pelletizing, compounding, melting, extruding, co-extruding, spinning, deposition, foaming, spray drying, coating, granulating, in particular spray granulating or granulating according to any process known within the processing of plastics or any combination of at least two of the aforementioned methods. Briquetting and/or pelletizing are in particular preferred.

A mixture comprising the porous material can be prepared in a mixer such as intensive mixers, rotary plates, marumerizers, and any other equipment known by a person skilled in the art. Preferred mixers are selected from the group consisting of intensive mixers, rotary plates, ball formers and marumerizers.

The molding can be carried out at elevated temperatures, for example in the range from room temperature to 300°C, and/or at superatmospheric pressure, for example in the range from atmospheric pressure to a few hundred bar, and/or in a protective gas atmosphere, for example in the presence of at least one noble gas, nitrogen, dry air with a relative humidity of preferably less than 45 % or a mixture of two or more thereof. The shaped bodies can be formed for example in an excenter press. A compacting force is preferably between 1 kN and 3000 kN, more preferably between 1 kN and 300 kN and most preferably between 10 kN and 150 kN. For higher forces the permeability of the shaped bodies is unnecessarily reduced and for smaller forces no stable shaped bodies are obtained. The smaller the shaped body, the higher the applied force can be chosen.

Preferably, the shaped body is produced with a pressing pressure in a range from 100 bar to 1000 bar, more preferably from 400 bar to 600 bar. The applied press can comprise an upper punch for compaction or it can compact from both sides with an upper punch and a lower punch. Further, the pressing can be performed under vacuum in order to avoid damaging the porous solid.

The step of molding can be performed in the presence of binders, lubricants and/or other additional substances that stabilize the materials to be agglomerated. As to at least one optional binder, any material known to an expert to promote adhesion between the particles to be molded together can be employed. A binder, an organic viscosity-enhancing compound and/or a liquid for converting the material into a paste can be added to the pulverulent material, with the mixture being subsequently compacted.

Suitably binders, lubricants or additives are, for example, aluminum oxide or binders comprising aluminum oxide, as described, for example, in WO 94/29408, silicon dioxide, as described, for example, in EP 0 592 050 A1, mixtures of silicon dioxide and aluminum oxide, as described, for example, in WO 94/13584, clay minerals as described, for example, in JP 03-037156 A, for example montmorillonite, kaolin, bentonite, hallosite, dickite, nacrite and anauxite, alkoxysilanes as described, for example, in EP 0 102 544 B1, for example tetraalkoxysilanes such as tetramethoxysilane, tetraethoxysilane, tetrapropoxysilane, tetrabutoxysilane, or, for example, trialkoxysilanes such as trimethoxysilane, triethoxysilane, tripropoxysilane, tributoxysilane, alkoxytitanates, for example tetraalkoxytitanates such as tetramethoxytitanate, tetraethoxytitanate, tetrapropoxytitanate, tributoxytitanate, or, for example, trialkoxytitanates, such as trimethoxytitanate, triethoxytitanate, tripropoxytitanate, tributoxytitanate, alkoxyzirconates, for example tetraalkoxyzirconates such as tetramethoxyzirconate, tetraethoxyzirconate, tetrapropoxyzirconate, tetrabutoxyzirconate, or, for example, trialkoxyzirconates such as trimethoxyzirconate, triethoxyzirconate, tripropoxyzirconate, tributoxyzirconate, silica sols, amphiphilic substances, copper, graphite, ascorbyl palmitate, expanded natural graphite (ENG), silicon carbide, polysaccharides, fatty acids, alcyl silicon resins , metal-organic framework materials, where the metal-organic framework has a layer composition, or mixtures thereof.

Suitable binders are for example commercially available under trade names like Pural® SB (aluminum oxide), Ludox® AS 40 (colloidal silica), or Silres® MSE100 (methyl and methoxy groups containing polysiloxane).

Preferred binder, lubricants or additives are graphite, stearic acid, magnesium stearate, copper platelets, silicon carbide, expanded natural graphite (ENG), ascorbyl palmitate, polysaccharides, for example commercially available as Zusoplast PS1, aluminum oxide, for example commercially available as Pural SB or mixtures thereof.

In a preferred embodiment, the shaped body comprises at least 1 % by weight of a binder and/or lubricant, which are selected from the group consisting of inorganic oxide, clay, concrete and graphite. Preferably the shaped body comprises less than 10 % by weight of a binder and/or lubricant and most preferably, the shaped body comprises between 1.5 % and 5 % by weight of a binder and/or lubricant and most preferably between 2.5 % and 3.5 %. Alternatively, no binder or lubricant is used.

Further additives which can be used are, inter alia, amines or amine derivatives such as tetraalkylammonium compounds or amino alcohols and carbonate-comprising compounds, e.g. calcium carbonate. Such further additives are described, for instance, in EP 0 389 041 A1,

EP 0 200 260 A1 or WO 95/19222. Further, pore-forming agents such as organic polymers, preferably methylcellulose, polyethylene oxide or mixtures thereof can be added. Preferably, the shaped body comprises from 1 % to 50 % by weight of further additives and more preferably from 3 % to 20 % by weight. Alternatively, no further additives are used.

The term vehicle includes but shall not be limited to cars, trucks, ships, airplanes, motorcycles and the like.

### Brief description of the drawings

The present invention is described in more detail at hand of accompanying drawings, in which:
- Figure 1: shows a plan view of a storage system according to the invention,
- Figure 2: shows a cross-sectional view of a storage system according to the invention and
- Figure 3: shows a schematic view of a vehicle according to the invention.

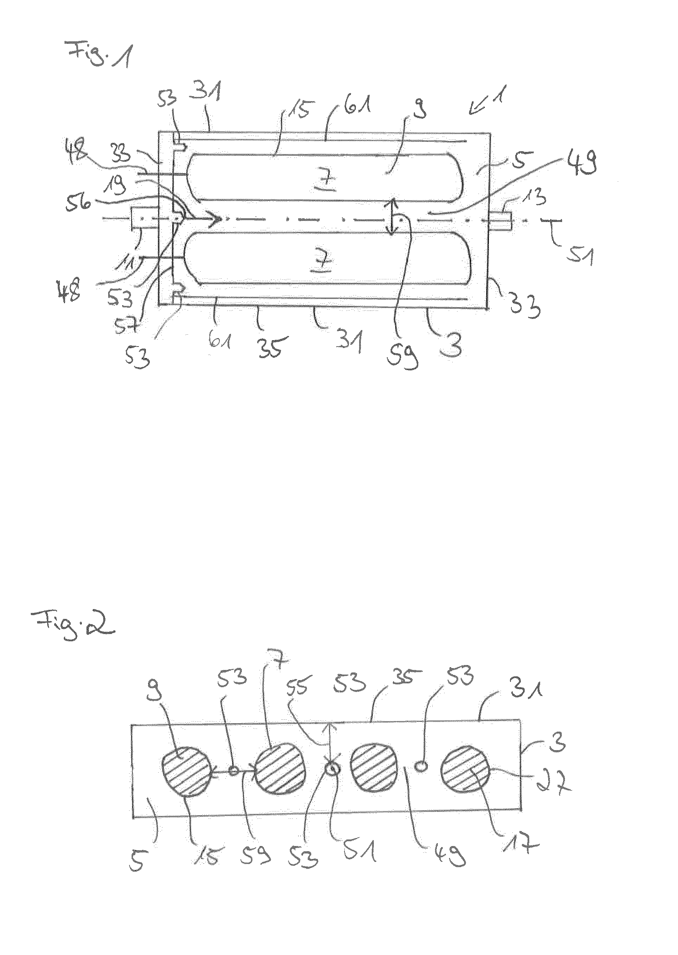

Figure 1 shows a storage system 1 according to the invention comprising a container 3 and two storage vessels 7. A second gas can be filled into the storage vessels 7 and/or discharged from the storage vessels 7 through a supply pipe 48. The container 3 has a cuboid form and the storage vessels 7 have a cylindrical form. The container 3 and the storage vessels 7 are mounted in a horizontal position. Further, the container 3 has a container wall 31 with two end surfaces 33 and a lateral surface 35 enclosing the storage vessels 7. The container 3 further has a first interior 5 and each storage vessel has a second interior 9 which is filled with a sorption medium 17. The second interiors 9 are enclosed by storage vessel walls 15.

The storage system 1 further comprises a nozzle 53, which is arranged at a virtual central longitudinal axis 51 of the container 3, and two nozzles 53 close to the lateral surface 35 of the container wall 31. Each nozzle 53 comprises a nozzle outlet 56. On the central longitudinal axis 51 the nozzle 53 is arranged in line with an inlet 11 and an outlet 13 of the container 3. The inlet 11 is arranged on one end surface 33 and the outlet 13 is arranged at the opposing end surface 33 of the container wall 31. Baffles 61 are arranged along the lateral surface 35.

A stream 19 of a first gas enters the container 3 through the inlet 11 and passes the nozzle 53, which is arranged on a plate 57. The stream 19 is further conducted, essentially along the central longitudinal axis 51 through an interspace 49, which is provided between the two storage vessels 7 due to the fact that the two storage vessels 7 are arranged in a shortest distance 59 to each other. The first gas leaves the container 3 via the outlet 13.

Figure 2 shows a cross-sectional view of a storage system 1 comprising four storage vessels 7 and three nozzles 53. Each storage vessel 7 has a radial cross-sectional circumference 27 of a circular form. The container 3 has a virtual central longitudinal axis 51 and the four storage vessels 7 are arranged horizontally and in parallel to each other and in one virtual plane next to each other. One nozzle 53 is arranged in line with the central longitudinal axis 51 with a second distance 55 between the nozzle 53 and the lateral surface 35 of the container wall 31. The four storage vessels 7 and the three nozzles 53 are arranged in one plane within the container 3. Further, all four storage vessels 7 are arranged with equal shortest distances 59 between each other and one nozzle 53 is arranged between two storage vessels 7, respectively.

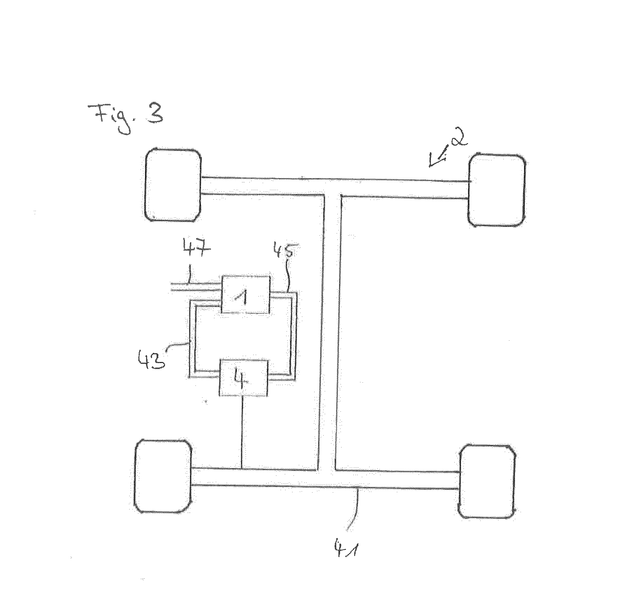

Figure 3 shows a vehicle 2 according to the invention comprising a storage system 1 and a combustion engine 4. A second gas comprising a fuel for the combustion engine 4 is led from at least two storage vessels 7, being part of the storage system 1, through a fuel pipe 43 to the combustion engine 4. The second gas is combusted in the combustion engine 4 leading to a first gas comprising an exhaust gas, which is formed in the combustion engine 4. The combustion engine 4 supplies energy to a drive axle 41 of the vehicle 2.

The first gas is conducted from the combustion engine 4 via a connecting pipe 45 back to the storage system 1, where the first gas passes through the first interior 5 surrounding the at least two storage vessels 7, transferring heat from the combustion carried out in the combustion engine 4 to the second gas still stored in the second interior 9 by means of the sorption medium 17. The first gas is conducted out of the storage system 1 via an exhaust pipe 47 to the surrounding of the vehicle 2, wherein the first gas possesses a lower temperature in the exhaust pipe 47 than in the connecting pipe 45. The exhaust pipe 47 may further comprise an exhaust gas catalytic converter.

### Comparative example

A vehicle comprises a storage system for the storage of natural gas, which is used as fuel. The storage system comprises four cylindrical storage vessels with storage vessel walls made of aluminum. The four storage vessels are arranged in one plane parallel to each other in a horizontal position. Each of the four storage vessels has an inner volume of 20 L, a length in longitudinal direction of 1 m and a diameter of 28 cm. The four storage vessels are filled with pellets of the MOF material C300, providing a bulk density of 500 g/L and a total adsorption enthalpy, referring to natural gas, of 8 MJ. A maximum storage pressure in the storage vessels accounts to 60 bar.

The four storage vessels are enclosed by a container of a cuboid form, having a length in longitudinal direction of 1 m and a height of 30 cm and a width of 120 cm. The container wall is made of aluminum and has a thickness of 2 mm. A first gas, which is the exhaust gas of the combustion engine, enters the container at a first end and leaves the container at an opposing second end, wherein the distance between the first and the second end corresponds to the length in longitudinal direction of the container.

The vehicle has a fuel consumption of 5 kg/h in average and thus an average mass flow of 10 g/s is conducted from the storage vessels to the combustion engine and back to the container of the storage system.

While driving, the second gas, which is the fuel, desorbs from the sorption medium and therefore the temperature in the storage vessels decreases.

Without heating of the storage vessels, the mean temperature over the total volume of the storage vessels is -30°C when the storage vessels are continuously emptied until the pressure in the storage vessels is 4 bar.

Leading the first gas through the container without any further means for flow control, such as nozzles, heat is predominantly transferred to the upper part of the storage vessels. On average, the part of the first gas reaching the lower part of the storage vessels has a temperature which is up to 200°C lower compared to the part of the first gas reaching the upper part of the storage vessels.

Further, already after a first quarter of the length in longitudinal direction of the container in flow direction of the first gas, the temperature of the first gas equals the temperature of the storage vessels.

Locally, especially in proximity to the inlet, where the first gas enters the container, the temperature at the storage vessel walls reaches up to 500 K, which can cause damage to the storage vessel walls, depending on its material. In proximity to the outlet, the temperature at the storage vessel walls is -15°C and the mean temperature over the total volume of the storage vessels is -10°C.

20 % by weight of the second gas, referring to the maximum storage capacity at 60 bar, have to remain in the storage vessel in order to maintain a minimum pressure level of 4 bar within the storage vessel being required for operation of the combustion engine.

### Example 1

The vehicle as described for the comparative example now comprises a storage system according to the invention, which differs from the storage system according to the comparative example in that the storage system according to the invention additionally comprises three nozzles as illustrated in Figure 2.

A mean velocity of the stream of the first gas in the container is 0.1 m/s. The residence time of the first gas in the container is 10 seconds at 50 % of the full load of the combustion engine.

The pressure loss in the container, substantially caused by the additional nozzles, is less than 10 mbar at full load of the combustion engine.

The temperature of the first gas is 500 K at the outlet of the combustion engine. By a temperature reduction concerning the first gas from 500 K to 358 K, a heat flow of 1600 watts is available.

1000 watts are required to compensate for the temperature reduction due to desorption, when the storage pressure is reduced to 4 bar in the storage vessels and a mean temperature of 40°C is established in the storage vessels.

Applying the nozzles for flow control in the container, the temperature of the first gas equals the temperature of the storage vessel walls not bevor reaching the last quarter, referring to the length in longitudinal direction, of the container. Local hotspots at the storage vessel walls in proximity to the inlet of the first gas show a reduced temperature of only 350 K, compared to the comparative example. In proximity to the outlet, the temperature at the storage vessel walls is 20°C. The mean temperature in the storage vessels, after desorption of the second gas and when the minimum storage pressure of 4 bar in the storage vessels is reached, is now 40°C.

Only 8 % by weight of the second gas, referring to the maximum storage capacity at 60 bar, are still entrapped in the storage vessel for providing the required minimum pressure level.

### Example 2

The vehicle as described for the comparative example now comprises a storage system according to the invention, which differs from the storage system according to the comparative example in that the storage system according to the invention additionally comprises five nozzles, provided at a plate. Three of the five nozzles are each directed towards an interspace between two storage vessels and two of the five nozzles are directed between one of the storage vessels and the lateral surface of the container wall, respectively. Further, two vertical baffles are provided between a storage vessel and the lateral surface of the container. Further, the diameter of the two nozzles is by a factor of 2^0.5, smaller than the diameter of the three nozzles. This embodiment is comparable to the embodiment as illustrated in Figure 1.

A mean velocity of the stream of the first gas in the container is 0.1 m/s. The residence time of the first gas in the container is 10 seconds at 50 % of the full load of the combustion engine.

The pressure loss in the container, substantially caused by the additional nozzles, is less than 10 mbar at full load of the combustion engine.

The temperature of the first gas is 500 K at the outlet of the combustion engine. By a temperature reduction concerning the first gas from 500 K to 323 K, a heat flow of 2000 watts is available.

1000 watts are required to compensate for the temperature reduction due to desorption, when the storage pressure is reduced to 4 bar in the storage vessels and a mean temperature of 50°C is established in the storage vessels.

Applying the nozzles for flow control in the container, the temperature of the first gas equals the temperature of the storage vessel walls not bevor reaching the last quarter, referring to the length in longitudinal direction, of the container. Local hotspots at the storage vessel walls in proximity to the inlet of the first gas show a reduced temperature of only 350 K, compared to the comparative example. In proximity to the outlet, the temperature at the storage vessel walls is 20°C. The mean temperature in the storage vessels, after desorption of the second gas and when the minimum storage pressure of 4 bar in the storage vessels is reached, is now 50°C.

Only 5 % by weight of the second gas, referring to the maximum storage capacity at 60 bar, are still entrapped in the storage vessel for providing the required minimum pressure level.

### Reference numerals

- 1: storage system
- 2: vehicle
- 3: container
- 5: first interior
- 7: storage vessel
- 9: second interior
- 11: inlet
- 13: outlet
- 15: storage vessel wall
- 17: sorption medium
- 19: stream
- 27: radial cross-sectional circumference
- 31: container wall
- 33: end surface
- 35: lateral surface
- 43: fuel pipe
- 45: connecting pipe
- 47: exhaust pipe
- 48: supply pipe
- 49: interspace
- 51: central longitudinal axis
- 53: nozzle
- 54: connecting pipe
- 55: second distance
- 56: nozzle outlet
- 57: plate
- 59: shortest distance
- 61: baffle

## Claims

1. A vehicle (2) comprising a storage system (1) and a combustion engine (4), the storage system (1) comprising a container (3) with a first interior (5) and at least two storage vessels (7), each with a second interior (9), wherein the at least two storage vessels (7) are disposed in the container (3), each of the at least two storage vessels (7) comprises a storage vessel wall (15) separating the first interior (5) from the second interior (9) and the container (3) has a central longitudinal axis (51) and comprises a container wall (31) with two end surfaces (33) and a lateral surface (35) enclosing the at least two storage vessels (7),
wherein the first interior (5) comprises a first gas and the second interior (9) comprises a second gas and a sorption medium (17), and the first gas comprises an exhaust gas from the combustion engine (4) and the second gas comprises a fuel for the combustion engine (4),
wherein at least one interspace (49) is provided between the at least two storage vessels (7) and
wherein the container (3) comprises at least one nozzle (53) with a nozzle outlet (56) for the first gas, the at least one nozzle (53) is connected with an exhaust gas outlet of the combustion engine (4) by a connecting pipe (45) and the nozzle outlet (56) of the at least one nozzle (53) is directed towards the at least one interspace (49).

2. The vehicle (2) according to claim 1, wherein all nozzles (53) are provided at one of the two end surfaces (33) of the container wall (31).

3. The vehicle (2) according to claim 1, wherein all nozzles (53) are provided at a plate, the plate being arranged in the first interior (5) between one of the two end surfaces (33) of the container wall (31) and the at least two storage vessels (7).

4. The vehicle (2) according to any of claims 1 to 3, wherein the at least two storage vessels (7) are arranged in the container (3) with a shortest distance (59) between the at least two storage vessels (7) in a range from 1 mm to 100 mm, providing the at least one interspace (49).

5. The vehicle (2) according to any of claims 1 to 4, wherein the container (3) comprises more than one nozzle (53) being connected with the exhaust gas outlet of the combustion engine, wherein the nozzle outlet (56) of at least one of the nozzles (53) is directed between one of the at least two storage vessels (7) and the lateral surface (35) of the container wall (31).

6. The vehicle (2) according to any of claims 1 to 5, wherein at least one nozzle (53) is arranged in a way that a first distance between the at least one nozzle (53) and the central longitudinal axis (51) of the container (3) is smaller than a second distance (55) between the at least one nozzle (53) and the lateral surface (35) of the container wall (31).

7. The vehicle (2) according to any of claims 1 to 6, wherein the at least two storage vessels (7) have a cylindrical form and are mounted in a horizontal position.

8. The vehicle (2) according to any of claims 1 to 7, wherein the at least two storage vessels (7) are arranged in parallel to each other and in parallel to the central longitudinal axis (51) of the container (3).

9. The vehicle (2) according to any of claims 1 to 8, wherein the container wall (31) comprises a double wall.

10. The vehicle (2) according to any of claims 1 to 9, wherein the sorption medium (17) is selected from the group consisting of activated charcoals, zeolites, activated aluminia, silica gels, open-pore polymer foams, metal hydrides, metal-organic frameworks (MOF) and combinations thereof.

11. The vehicle (2) according to any of claims 1 to 10, wherein the sorption medium (17) is present in form of at least one monolith and the at least one monolith has an extension in one direction in space in a range from 10 cm to 100 cm.

12. The vehicle (2) according to any of claims 1 to 11, wherein the fuel is selected from the group consisting of natural gas, shale gas, town gas, methane, ethane, hydrogen, propane, propene, ethylene, carbon dioxide and combinations thereof.

13. A process for operation of a vehicle (2) comprising a storage system (1) and a combustion engine (4), the storage system (1) comprising a container (3) with a first interior (5) and at least two storage vessels (7), each with a second interior (9), wherein the at least two storage vessels (7) are disposed in the container (3), each of the at least two storage vessels (7) comprise a storage vessel wall (15) separating the first interior (5) from the second interior (9) and the container (3) has a central longitudinal axis (51) and comprises a container wall (31) with two end surfaces (33) and a lateral surface (35) enclosing the at least two storage vessels (7),
wherein at least one interspace (49) is provided between the at least two storage vessels (7)
wherein the first interior (5) comprises a first gas and the second interior (9) comprises a second gas, which is contacted with a sorption medium (17),
wherein at least part of the second gas is conducted from the second interior (9) to the combustion engine (4) and the second gas is combusted in the combustion engine (4) to form the first gas,
and wherein the first gas is conducted from the combustion engine (4) into the first interior (5) and through at least one nozzle (53) having a nozzle outlet (56) and a stream of the first gas is directed from the nozzle outlet (56) into the at least one interspace (49), where the stream of the first gas flows along the storage vessel walls (15) having a maximum flow velocity at the nozzle outlet (56) of at least 30 m/s.

14. The process according to claim 13, wherein the first gas has a temperature of at least 300°C when entering the first interior (5).

15. The process according to claim 13 or 14, wherein the second gas is stored in the at least two storage vessels (7) at a pressure of up to 260 bar.
